# EUROPEAN PATENT SPECIFICATION

(11) **EP 2 860 450 B1**
(45) Date of publication and mention of the grant of the patent: **14.12.2016**
(21) Application number: 13187984.3
(22) Date of filing: 09.10.2013
(51) Int. Cl.: F23N 5/00, F23G 5/027, F23G 5/16, F23G 5/20, F23G 5/46, F23G 5/50, F23G 7/07

(54) **METHOD FOR THERMAL PROCESSING OF ORGANIC WASTE**
VERFAHREN ZUR THERMISCHEN BEHANDLUNG VON ORGANISCHEN ABFALLSTOFFEN
PROCÉDÉ DE TRAITEMENT THERMIQUE DE DÉCHETS ORGANIQUES

(43) Date of publication of application: 15.04.2015
(73) Proprietor: Bak, Tadeusz, 05-660 Warka (PL)
(72) Inventor: Bak, Tadeusz, 05-660 Warka (PL); Wysocki, Zygmunt, 31-228 Krakow (PL); Wysocki, Michal, 31-216 Krakow (PL)
(74) Representative: Eupatent.pl

(56) References cited:
- WO-A1-2007/042559
- AU-B2- 2011 253 788
- US-A- 3 794 565
- US-A1- 2007 294 937

## Description

The object of the invention is a method for thermal conversion of organic waste and an apparatus for thermal conversion of organic waste.

Technical progress in the methods of thermal wastes disposal is dynamic. Many companies try to find the best solution of wastes disposal in the most effective and economic way and in accordance with the all applicable provisions concerning environmental protection. Since wastes have a relatively high calorific value, so the natural trend is a trial to recover heat energy as far as possible.

The most popular method of wastes disposal is the combustion of waste at high temperatures in very complex and expensive installations - in various type furnace boilers.

The precursors in implementing this technology are the following companies: Alstom (Foster-Wheeler), Lurgi-Lentjes-Deutsche Babcock Energie (LLBj) and Babcock-Wilcox. First in the world municipal wastes incineration plant was erected in 1875, in Meanwood Road, England. Whereas the first German incineration plant of municipal wastes was found in Hamburg in 1892. Since the mid 1960s of 20th century, a dynamic development of installations for thermal treatment of wastes in Western Europe was occurred. Currently in Europe, approx. 400 municipal wastes incineration plants are operable, the majority of them comply with EU standards concerning emissions into the environment.

Municipal wastes and sewage sludge in the world are processed to the greater or lesser extent, or re-used (in composting, incineration, gasification, etc.). The rate of their utilisation is subject to the level of economic development of a given country and varies from 15% for countries with a lower development rate, up to 85% for those most developed. In this background, Poland is located particularly adversely - managing only 3.8% of municipal wastes - indicating the size of the home reserve resources of renewable sources of energy agents. Combustion undergoes municipal wastes and sewage sludge. Generally, the authors of specific solutions suggest co-incineration of municipal wastes and sewage sludge with hard or brown coal in CHP plants, power plants or cement mills.

Incineration is an effective and commonly used method of reducing the quantities of wastes generated in the EC countries; however, it is extremely costly method both in terms of investment and operationally.

Besides, the incineration is a solution of enormous negative impact on natural environment despite continuous improvement of flue gas purification techniques. In the mid 1990s, a standard flue gas purification system was composed of a two-stage wet electrostatic absorbing system, an adsorption node on active carbon, and catalysts for the reduction of nitrogen oxides and the decomposition of dioxins. The flue gas treatment system itself absorbed much more than 50% of the total costs for the construction of wastes incinerators and allowed to maintain acceptable emission levels.

Now in certain purification systems for flue gases a dry system is applied that consists in the injection of calcium reactant: CaO, Ca(OH)₂ or sodium reactant: NaHCO₃, the injection of powdery activated carbon, fabric filter dust collectors, selective non-catalyst reduction of nitrogen oxides (SNCR) involving the introduction of ammonia or urea solution into the boiler. As can be seen, all varieties of used technologies in the wastes combustion process to treat flue gases need dosing huge amounts of additional chemical compounds. In this way in many cases, wastes incineration plants generate by weight not less wastes in respect of the weight of incinerated waste.

The largest suppliers of incineration plants are currently: Babcock & Wilcox Volund (Denmark), Martin (Germany), CNIM (France), Austrian Energy & Environment (Austria, Switzerland), Keppel Seghers (Belgium) and many others.

The main disadvantages of wastes incineration are the following:
- Cause air pollution by gases of high hazards to man; Pollutants occurring in concentrations below the standard do not lose their characteristic harmfulness and the limit values of standard are agreed upon and there is no guarantee that they have been properly defined;
- Production of large quantities of slag and ash;
- One tonne (Mg) of burnt municipal wastes results in 290 up to 320 kg of slag and dust, according to a type of exhaust purification process (process: dry, semi-dry, wet);
- The wastes incineration "products" are: wastes water generated while cooling slag from furnaces, and wastes water from wet flue gas treatment. The wastes water contains several substances that are very toxic, such as: phenols, cyanides, fluorides, arsenic, and heavy metals. It is often necessary to erect a wastes water treatment plant for the wastes incinerator;
- The incineration plant produces even more wastes than it is able to utilise. This is because of a simple fact that the combustion process of wastes needs additionally to supply oxygen, water and other substances supporting the purification process of flue gases;
- It requires a complex dedusting system and a highly efficient flue gas purification system, that cause raising investment costs of the wastes incineration plant;
- As a result the combustion process, thousand of new chemicals are formed that were not present in the wastes before their incineration. Incineration plants operate as chemical synthesisers (during the combustion, a part of chemical compounds decompose, but at the same time atoms of disintegrated particles fall in reactions with other atoms to produce new substances that are often more dangerous than the original, contained in waste);
- Producing high toxicity waste;
- Negative impact on the environment, in particular on the atmosphere, where hazardous compounds from the group dioxins and furans are emitted;
- Incineration carried out incorrectly gives residues containing organic substances and pathogenic micro-organisms;
- The construction costs of wastes incineration plant is the highest in comparison to all other technologies offered on the market;
- Very high costs of operation - have to be translated into the charges for the citizens;
- A negative social image;
- Requires a special construction of sites for technological wastes (ash and wastes from flue gas purification) that are classified mostly as toxic because they collect the most dangerous part of toxins, depending on the stage of purifying the flue gases. In order to protect them against leaching toxic substances, they are solidified in concrete products or the process of wastes vitrification is carried out. This increases the costs of wastes incineration;
- Dust amounts emitted to the atmosphere grow, very burdensome in operation technology used only to a large scale.

The heat treatment of wastes - in the assumptions of comprehensive wastes management - concerns only these wastes residues which lost their utility values because of earlier applied wastes utilisation methods, and may be only used as a raw material to produce energy. As early as before I World War the research and development actions had been taken out to refine liquid and unctuous residues from crude oil processing, and then municipal wastes and municipal sewage sludge. Today, these processes have gathered a specific ecological and economic importance in utilising and neutralising many of municipal wastes and sewage sludge. These processes dominate not only by their economic efficiency over the combustion of the mentioned above wastes in CHP plants, but they produce smaller volume of deeply neutralised and utilised residues with their far less harmfulness to the environment.

These wastes heat treatment processes include:
- Pyrolysis - the specificity of pyrolysis technology is to use synthesis gas (produced in considerable quantities), containing mainly CO + H₂ for the production of electricity and heat;
- Plasma - allowing to obtain synthesis gas and vitrified solid products;
- Gasification - giving a high value semi-product in a form of synthesis gas - that leads additionally to a significant neutralisation of environmentally harmful materials, at the same time, this process is preceded by pyrolysis of organic components together with depolymerisation of plastics.

### Pyrolysis

Pyrolysis is a process of endothermal transformation of organic substances rich in carbon, carried out in elevated temperatures (350 °C up to approx. 850 °C) in the environment completely deprived of oxygen or in presence of its negligible small quantities (low-temperature pyrolysis: 350 °C - 500 °C; high-temperature pyrolysis: 700 °C - 850 °C). It requires providing heat from the outside. During pyrolysis, the mass of wastes is converted into:
- Pyrolytic gas - that contains mainly hydrogen, methane, ethane, and their homologues, steam, carbon monoxide and carbon dioxide, as well as H₂S, NH₃, HCl and other;
- Pyrolytic coke - a solid phase containing: carbon, metals and other inert substances;
- Liquid substances - a mixture of oils, tars, water with simple aldehydes dissolved in it, alcohols, and organic acids.

Commercially, this process is used on an industrial scale in many places in Europe and all over the world. Amongst the most well known installation of this type are factories: in Burgau, Hamn in Germany, and several dozen other places in the world. Despite unquestionable benefits and both technological and environmental advantages with reference to the wastes incineration, pyrolysis has the following disadvantages:
- The wastes must be crushed, melt and/or separated before the entry into the pyrolytic furnace in order to prevent the blockage of wastes feeder and/or transporting system;
- large residue of post-reaction wastes in a form of pyrolytic coke breeze, oils and tars, represents approx. 20-35% of processed waste;
- Oils and pyrolytic tars contain toxic and carcinogenic compounds;
- Pyrolytic coke does not comply with EU and Polish standards for storage because of the high carbon content;
- Pyrolytic coke contains a large number of heavy metals;
- Production of sterile slag and other residues requires additional disposal of pyrolytic coke, e.g. in incineration plants;
- To do this, the supporting fuel is required to maintain this process;
- Low energy efficiency (comparable and even less than for the combustion);
- Formation of gases that are very difficult for purification of pyrolytic and synthesis gas, flue gas and other products of pyrolysis (requirement of extensive and costly treatment and neutralisation node, like in the case of wastes incineration plant);
- Higher investment and operational costs than for incineration plants.

### Plasma

Plasma is a term assigned to strongly ionised gas, in which there are neutral particles, ionised atoms and electrons. Despite the fact that plasma contains free charged particles, in a macro scale, it is electrically neutral. The ability to achieve high temperatures in plasma beam makes it possible to decompose the wastes in a more effective way than the incineration since the plasma generated by an electric field, raises temperature to a high value (more than 3,000 °C to 14,000 °C, and in some installations - even up to 20,000 °C), higher than the flame in boil furnaces and its energy can cause decay of all chemical compounds into simpler components, i.e. to transform them in the gaseous phase.

At present, 25-30 installations are operating in the world. Most of them are incineration plants for the disposal of hazardous wastes such as: ammunition, medical wastes, tannery wastes, asbestos, PCBs, and other. The use of low-temperature plasma is a relatively new idea. The most active companies in offering plasma technology are: Plasco Engineering Group (Canada), Alter NRG (Canada), Pyrogenesis (Canada), Allied Tech. (USA), Solena (USA), StarTech (USA), Geoplasma (United Kingdom), Europlasma (France).

The main disadvantages of plasma technology would be the following:
- Very high investment costs of construction (approx. 3 times higher than the construction costs of classic incineration plant);
- A high energy-consuming process (installations require high-calorific wastes: 12-16 MJ/kg). Taking into account that the average net calorific value of municipal wastes from large cities in Poland is about 7-10 MJ kg, this means that the process should require a huge quantity of additional energy;
- Very high costs of operation, i.e. the increase in charges for the public (1 kg of wastes needs approx. 4 MJ of energy to be utilised);
- All working installations are characterised by large technological problems of the operation of plants as well as difficulties in keeping emission limits (authorities of Ottawa have recently closed the installation of Plasco company - 25,000 Mg/year - due to the numerous breakdowns and permanent exceeding the emission limits);
- Low energy efficiency;
- The data from the existing plasma installations do not confirm especially low level of emissions - it is comparable to the combustion process at the incineration plants on;
- The technology is profitable only to a large processing scale - more than 300,000 Mg/year.

### Waste gasification

Gasification provides the maximum possible reduction of waste volume. The rate of material use of all kinds of wastes of organic character in different temperature ranges is the highest with reference to all other technologies. Apart from this, the gasification process eliminates 100% of dioxins and furans that are not able to be recombined at low parameters of temperature and pressure. Efficiency Index of waste gasification is particularly high when the utilisation of obtained intermediate semi-products is coupled with other installations in CHP plants, equipped with units to produce electricity, such as, e.g., turbo-generators or ORC. By implementing such solution, at the same time extremely high environmental and economic effects can be obtained. This technology has been checked in the multi-annual testing of both pilot and commercial installations. Its undoubted advantages over other technologies induced that more and more companies take decisions on its application in their planned thermal plants of waste disposal.

The recent large scale plant to mineralise mixed municipal wastes has been built in Lahti, Finland, in 2012, which achieved processing output approx. 250,000 Mg/year and power production of about 50 MWₑ and 90 MWₜ. Applied technology allows for high efficiency utilisation of only mixed municipal wastes to the energy form of electricity and heat.

The basic assumption of modification of the gasification system, when designing the plant in Lahti, was an idea of combustion of post-reaction gases in a gas boiler, which in effect led to achieve high temperature of 900 °C. Such high temperature and specificity of the technological equipment to gasify wastes induces the erection of complex systems of treating post-reaction gases, which strongly raise the construction costs of such plant.

### Mixed system: a low-temperature quasi-pyrolysis and gasification

It is a process that is similar to the gasification process, in which a matter of organic character, under the effect of heating in temperature range from 300 to 600 °C, with a little amount of air, is decayed into simple compounds: the so-called organic gas containing a high percentage of H₂, CO, and small amounts of hydrocarbons up to C₈, and small quantities of inorganic fraction of mineral residues in a form of glass and metals that do not constitute any hazardous wastes. The resulting gas is subject to a full oxidation in a catalytic process to achieve CO₂ and H₂O.

The basic feature of this technology is its ability to dispose all wastes of organic character in a solid, liquid and semi-liquid phase, regardless of their calorific values, the content of: toxic compounds, oils, ash, moisture content as well as their size.

It is the only technology in the world which allows for the full conversion of chemical energy any type of wastes of organic character, into electricity and heat. The most important aspect of this technology, despite the fact that disposed will be hazardous wastes, is no negative impact on the environment, in particular, on human health.

Advantages of such system are the following:
- Complexity of the solution - the ability to utilise various forms of wastes of organic character regardless of their physical state, including hazardous ones, in one installation - none of the available at present technologies offers this;
- Checked and commonly operating from many years technologies - a unique combination of several technologies, the result which a synergistic effect has been reached;
- It does not require erection of large and bulky objects;
- It does not require designating a protection zone for the plant;
- A low temperature of the process - that guarantees the most effective waste disposal and does not produce any other additional wastes, at the same time, with an optimum electricity recovery owing to the operational parameters of the system;
- The highest efficiency of converting wastes into energy - an exceptionally low energy-consuming process - therefore, there is huge excess of post-reaction heat that may then be used for the production of electricity;
- A favourable energy balance of the process - the highest energy efficiency from all technologies available on the world market with the lowest energy-consuming process;
- A low cost of the investment - compared to the described technologies - many time cheaper;
- A low operational costs - compared to other technologies - the unit cost is many times cheaper;
- Improvement of sanitary conditions and the reduction of health risk of residents;
- The integrated approach - reduces operating cost of the disposal of hazardous and industrial wastes compared to other methods; the synergistic effect;
- A short time of the investment - a few to more than a dozen months since obtaining a building permit;
- Easy scalability of the investment;
- In the process does no dioxins and furans are formed;
- In the process are not produced any additional NOx, methane and CO;
- The total dehydration of processed wastes;
- The total deodorisation of processed wastes;
- The total oxidation of organic compounds to H₂O and CO₂;
- The lack of additional installations for flue gas purification. The existing installations are sufficient to maintain the ecological requirements;
- The post-reaction waste (mineral) contains less than 1 % of the content of C_{org};
- Metals and metal oxides are in a sustainable way related to the parts mineral wastes;
- Referentiality - is based on the integration of repeatedly proven in the world technologies classified to BAT (Best Available Techniques), it also uses Polish engineering idea;
- Radical limitation of the quantities of stored wastes - in particular, their organic fractions that is subject to chemical and biological transformations in the process of storage;
- The lack of stack installation, so characteristic for incineration plants, a positive social view.

Disadvantages of the system are as follows:
- The lack of disposal of inorganic wastes.

This type mineralization system has been presented in a Polish patent application P.364331, in which an installation for waste mineralisation has been described, including: a reactor with an initial chamber, in which the wastes are dried and preliminary degassed, a reaction chamber in which are arranged the conditions necessary for a thorough degassing and gasification of wastes with reduced oxygen content. The presented reactor has no adjustable operational parameters. Therefore, the wastes have to be supplied into the reactor in strictly defined proportions, so as to ensure appropriate conditions for the effective gasification.

A US patent US3794565 discloses a method for thermal treatment of waste. It discloses an apparatus for pyrolyzing heat decomposable nongaseous material comprising in combination an elongated pyrolysis chamber for heating said material to a temperature sufficient to result in at least partial decomposition thereof, means for introducing said material into one end of said pyrolysis chamber, means for moving said material through said pyrolysis chamber, means for removing a solid residue from the other end of said pyrolysis chamber, gas sealing means for limiting the admission of air to said pyrolysis chamber, exhaust means for withdrawing a mixture of pyrolysis and burner combustion gases from said pyrolysis chamber, a burner disposed adjacent to said other end of said pyrolysis chamber such that hot combustion gases from said burner are brought into intimate contact with said material passing through said pyrolysis chamber.

AU2011253788 - B discloses an integrated process for solid waste treatment which involves subjecting the carbonaceous solid waste obtained from the pyrolysis step to a gasification to recover a synthesis gas fraction. This syngas is added to the pyrolysis gas stream and then fed to an energy recovery stage with production of thermal energy.

The object of this invention is a combination of several technologies for processing organic wastes into a single integrated technological sequence allowing in an optimal way to transform chemical energy of the processed wastes into electricity and heat by using a low-temperature quasi-pyrolysis and gasification.

The object of the invention is a method for thermal conversion of waste as characterized in the appended claims.

The present invention is shown by means of exemplary embodiment on a drawing, in which:

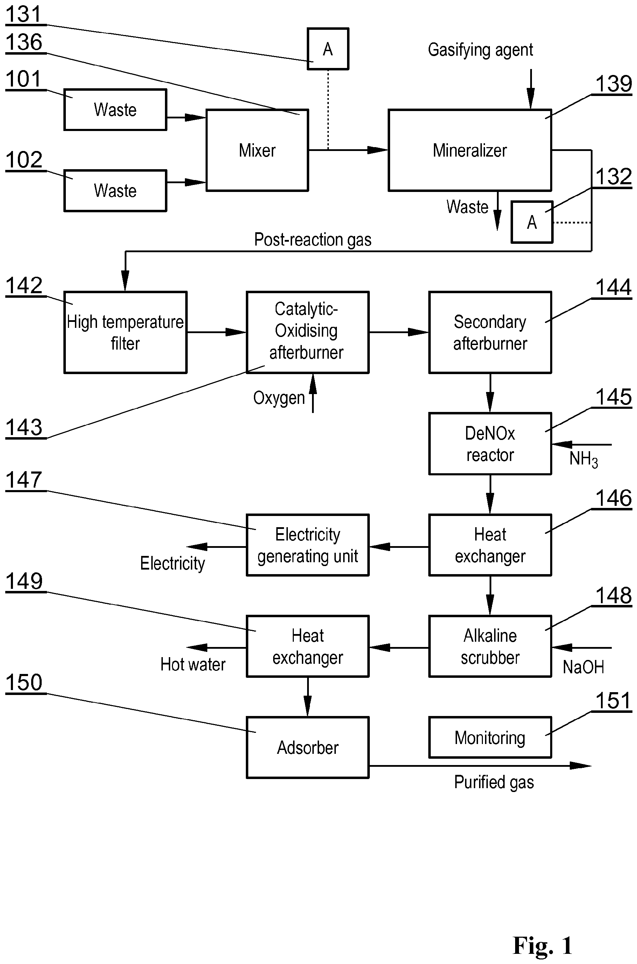

Fig. 1 presents a diagram of a processing line,
Fig. 2 presents schematically a longitudinal cross-section of an exemplary mineraliser,
Fig. 3A-3E present schematically lateral cross-sections of an exemplary mineraliser,
Fig. 4 presents schematically an exemplary mineraliser in an oblique view,
Fig. 5 presents an exemplary table of wastes.

The installation described is capable of thermally converting all kinds of wastes of organic character, irrespective of their state of aggregation, and particularly:

| Waste type | Waste CODE |
|---|---|
| Biodegradable waste (101) | 20 02 01 |
| Unsegregated (mixed) municipal wastes (102) | 20 03 01 |
| Combustible wastes (alternative fuel) (103) | 19 12 10 |
| Other waste (including mixed substances and objects) from | 19 12 12 |
| waste mechanical treatment, other than those mentioned in 19 12 11 (104) | |
| Stabilised municipal sewage sludge (105) | 19 08 05 |
| Hazardous liquid waste (106) | Different codes |
| Hazardous solid waste (107) | Different codes |
| Non-hazardous waste, including | Different codes |
| Used tyres (108) | 16 01 03 |
| Waste electrical and electronic equipment (109) | 20 01 36 |

The Waste Code is provided in accordance with the Polish Regulation of Minister of Environment, of 27 September 2001 on waste catalogue (Polish Journal of Laws, 2001, no. 112, item 1206).

The basic product of the entire process is electricity and/or heat. The process according to the present invention allows to obtain it in an efficient manner due to processing of waste, in a substantially longitudinal tube called a mineraliser or a gasifier, into a post-reaction gas of suitable parameters, which is subsequently oxidized in a catalytic purification installation, where its temperature increases due to oxidation. The purified gas in a heat exchanger 146 can heat up water to convert it into steam or air, which after supplying it to an electrical current generation unit 147, converts heated gas energy into electricity. Naturally, the gas after leaving the heat exchanger must be properly purified and cooled in order to be able to be emitted to the atmosphere without prejudice to the environment. In order to make it possible, the process of mineralization (gasification) shall be appropriately controlled. The process can be divided into several stages and phases: an optional entry phase comprising delivery of waste or their mixtures, mineralisation, processing gas purification, heat exchange and production of electricity and/or heat, emission.

The installation may be supplied with different kinds of prepared waste 101, 102 or their mixtures, so that one batch comprises waste of a relatively constant characteristics (calorific value, moisture content).

### Mineralization

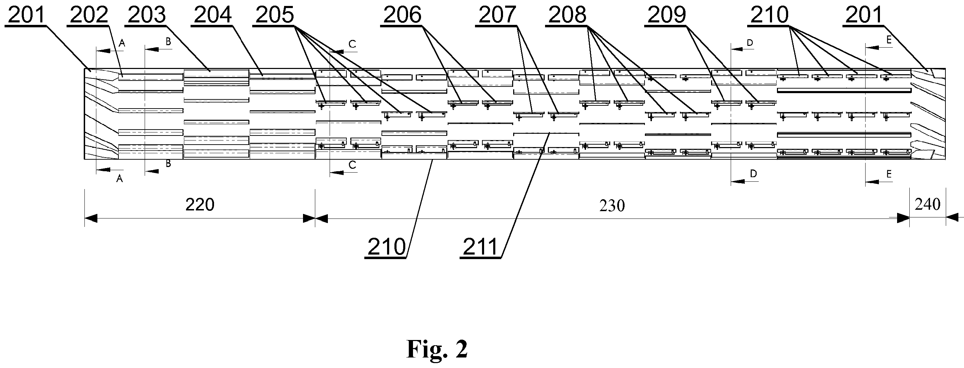

The process of mineralization (gasification) is conducted in a specially prepared pipe, called a mineraliser 139. Optionally, a plurality of mineralisers can be used, which is advantageous in particular in case of processing wastes of different kinds. Preferably the tube 139 is inclined to the ground at a small angle, about 1 degree. The mineraliser 139 is equipped with a mixer 136 and a feeder into the mineraliser. In the mixer 136, wastes 101, 102 of predetermined parameters (such as average calorific value and moisture content) are mixed. The waste batch prepared in the mixer 136 is supplied to the mineraliser feeder. The role of the feeder is to ensure continuous supply of the batch material into the mineraliser. The mineraliser 139 is rotated during its operation with a low rotational speed of 1 rotation per minute. The inclination and the rotational speed allow the waste to be mixed during the process. It is characteristic that inside the mineraliser 139, the construction of which is presented in details in Figs. 2-4, there are installed elements for scattering the batch mineral during rotation of the tube. Preferably, these are internal structures made of steel, for example special vanes (guides), which due to an appropriate inclination angle, which is preferably adjustable, induce faster or slower movement of the waste in the mineraliser. This allows for optimising the course of the mineralisation process. Thanks to the installation of vanes with an adjustable inclination angle, it is possible to adjust the mineraliser to process waste of a particular type, which allows to select more optimally the composition of waste mixture 101, 102. In view of the fact that the mineraliser has adjustable configuration, if the stream of supplied waste changes, it is also possible to adjust the operation of the mineraliser to the current content of moisture and the calorific value of the processed waste stream. With a use of a few mineralisers, the operation of one of them may be temporarily stopped in order to change its configuration, without interrupting the processing of waste in the other mineralisers, which is of particular benefit while processing waste of the type which must be processed rapidly, which is fed into the installation in quantities exceeding the maximal volume of storage tanks.

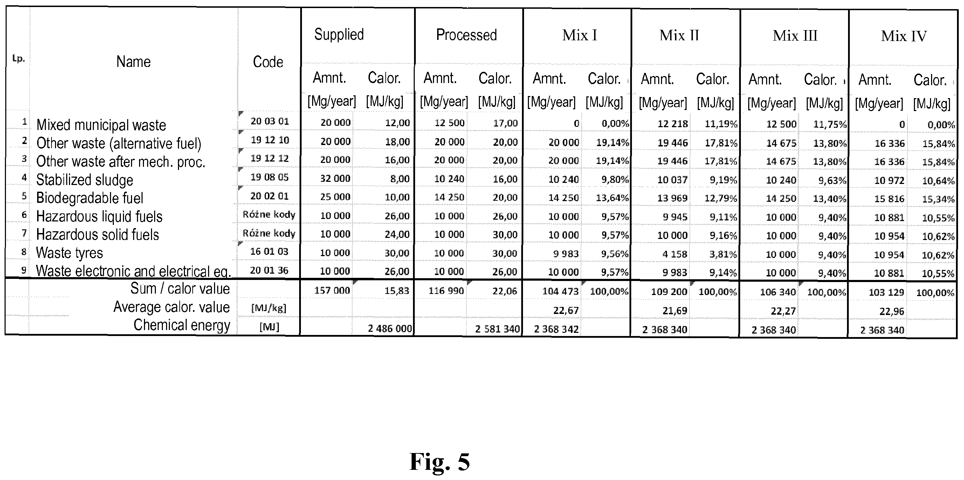

The table presented in Fig. 5 shows types of wastes, their calorific value measured at the input to the system and the quantities and calorific value after the process of preparing the wastes to be mineralised. In addition, four types of exemplary mixtures are presented.

The basic aim of preparing the mixtures is to obtain a mixture of a predetermined amount of chemical energy and moisture content.

The parameters for the various types of wastes, presented in Fig. 5, their calorific values and exemplary mixtures are only examples illustrating the method of preparation of the individual mixtures, which may be processed in the installation according to the present invention.

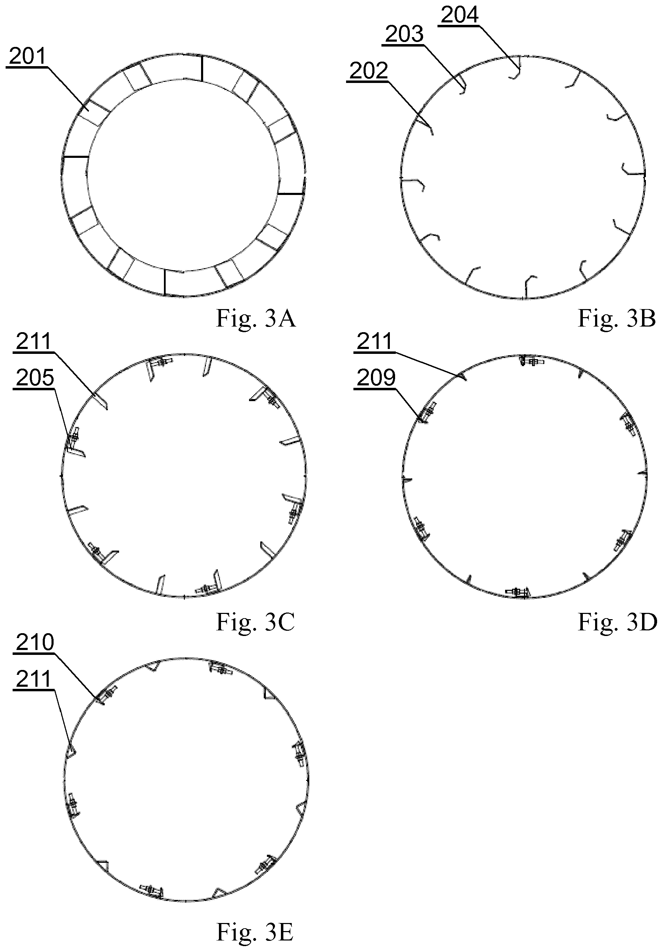

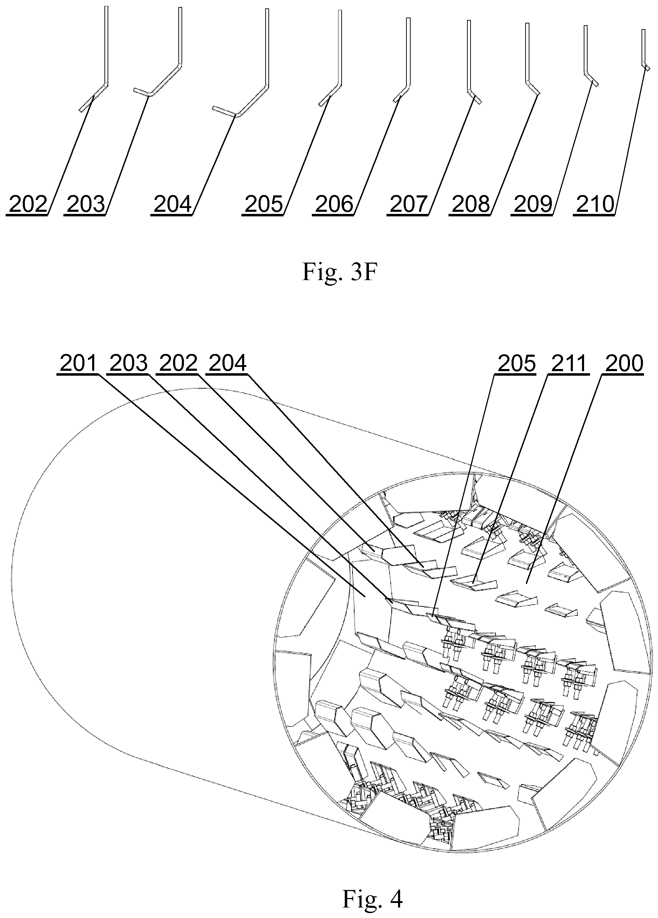

The construction and the operation mode of an exemplary mineraliser have been discussed in relation to Figs. 2-4, where Fig. 2 presents schematically a longitudinal cross-section of the mineraliser, Figs. 3A-3E present schematically lateral cross-sections of mineraliser along the lines, respectively: A-A, B-B, C-C, D-D, E-E from Fig. 2, Fig. 3F presents schematically lateral cross-sections of the individual vanes, and Fig. 4 presents schematically the mineraliser in an oblique view, with a considerable inclination.

The mineraliser has a form of a substantially longitudinal, rotatable tube having an internal structure, preferably made of steel, which is preferably adjustable, which can be set up depending on the moisture content and calorific value of the mixture supplied to the particular mineraliser.

The mineraliser is a steel tube 200, made of high temperature resistant metal blank and is tilted to the ground at an angle of approx. 1°. The mineraliser lies on two raceways and is rotated around its longitudinal symmetry axis. The rotation of tube causes the movement of waste on vanes 201-211, looking up in the lateral cross-section of the tube, and its falling from a height related with a shape of given vane. The inclination of the tube makes the batch material moving slowly along the tube axis.

In the exemplary mineraliser, having a diameter of about 2 meters and a length of about 20 metres, the batch material passes through entire tube in about 30 to 60 minutes, depending on the operational parameters set for the mineraliser. The rotational speed is about 1 rpm.

The mineraliser is heated as follows. First, the gas burners fuelled with e.g. natural gas or diesel fuel are ignited and the tube is heated up to a particular temperature, i.e. to about 600 °C. Then, the gas burners are switched off, and the process is self-sustained and the whole organic waste is subject to gasification.

The batch material may be fed into the mineraliser by different kinds of devices, such as a conveyor, and the inert waste is received at the end of the mineraliser and cooled to a temperature that allows for its further transport. The rotational speed of the mineraliser can be regulated.

The tube comprises three zones: an evaporation zone 220, where the evaporation of moisture content takes place, a mineralisation zone 230, where the main process of gasification and the conversion of waste into gas and inorganic waste occurs, and an end zone 240, in which there is no more waste but organic gas only, where the non-mineralised waste is received.

In the first part of the evaporation zone 220, presented in the cross section of Fig. 3A, the exemplary vanes 201 have a shape of flat blanks intended for the initial mixing the batch material. The second part of the evaporation zone 220, presented in a cross section on Fig. 3B, contains for example three rings of vanes arranged alternately in each ring 202, 203, 204, in a shape of vessels of different depth, from which the batch material is poured while rotating the tube 200.

In the mineralization zone 230, there are several rings of vanes and in each ring there are alternately mounted vanes 211 of a constant inclination angle and vanes 205-210 of an adjustable inclination angle. Vanes 211 are arranged in parallel to the longitudinal axis of the tube 200, so the angle of inclination with reference to the horizontal level is equal to the inclination level of tube 200. These vanes constitute both the means to move the batch material inside the tube and a structure for stiffening of the tube 200. The vanes 205-210 may have adjustable and/or regulated inclination angle along the longitudinal symmetry axis of tube 200, preferably within the range of -1% to +7.5%. Setting the inclination angle for vanes 205-210 to a negative value will slow down the movement of batch material along the tube. In particular, the adjustment of inclination angle of vanes 205-210 contrary to the direction of inclination of the tube results in that the material on vanes 205-210 is not moved towards the outlet of the tube and is moved only on vanes 211. Setting the inclination angle of vanes 205-210 to zero induces that the material on vanes 211 and 205-210 is moved with the same speed. In turn, setting the inclination angle of vanes 205-210 to a positive angle results in that the material on vanes 205-210 is moved faster than the material on vanes 211. Thereby, the adjustment of inclination angle of vanes 205-210 enables to adjust the speed transporting the batch material along mineralization zone 230. Vanes 205-210 in mineralization zone have a shape of vessels, the depth of which decreases towards the outlet of tube 200 due to a decreasing amount of material which remains to be mineralised in the direction towards the outlet of tube 200.

In the end zone 240, into which the gasification agent is supplied, such as oxygen, air, steam, carbon dioxide, hydrogen or their mixtures, there are vanes 201 arranged similarly as the vanes 201 in the first part of the evaporation zone 220, which play a role of limiters for possible residues of non-mineralised material.

An important parameter, which has influence on properties of the post-reaction gas, is the amount of the gasification agent supplied to the mineraliser. The amount of the gasification agent is set so as to obtain, in the post-reaction gas, the highest possible content of carbon oxide CO and hydrogen H₂ with a low content of carbon dioxide CO₂, and such that the temperature of the post-reaction gas remains within the range of 300-700°C. The parameters of the post-reaction gas are measured with an analyser 132, comprising sensors of gas composition and temperature sensors.

The process of mineralisation in the presented mineraliser can be controlled by changing rotational speed of tube 200 and/or by the change of inclination angle of vanes 205-210. By changing rotational speed of the tube 200, the intensity of pouring the material across the cross section of the tube is modified. Increasing the rotational speed of the mineraliser allows for a faster evaporation of the batch material in zone 220, thus a greater rotational speed should be set for materials with lower moisture content. Change of the angle of inclination for vanes 205-210 induces change of the speed of moving the material through the mineralization zone 230. Increasing the angle of inclination for vanes 205-210 allows for faster passage of the batch material through zone 230, and therefore this adjustment should be applied for materials with a higher calorific value, that are mineralised faster.

In order to achieve efficient processing of a wide range of wastes, there may be employed a plurality of mineralisers of which each may have adjusted other angle of inclination for vanes 205-210 of the mineralization zone. Then, by using suitable mixers 136, each mineraliser has adapted such a combination of the batch material that is processed in its optimal way. For example, if the first mineraliser 139 has the inclination angle of vanes less than the vane angle adjusted for the second mineraliser, then as the batch material for the first mineraliser 139 there should be chosen Mixture II in Fig. 5, and as the batch material for the second mineraliser 140 there should be chosen Mixture IV in Fig. 5. For each of the mixtures fed to mineralisers their mean moisture content is calculated on the basis of the data from the analyser 131 and taking into account the moisture content, the rotational speed of the tube is adjusted.

### Cleaning of the processing gases:

In the mineraliser the waste mixture is processed into a high energy reaction gas that is then supplied to high temperature filters 142 and a catalytic-oxidising afterburner 143, and a secondary afterburner 144, where it is subject to full oxidation to H₂O and CO₂ in a multi-catalytic system, with large quantities of reaction heat released. Part of that heat is returned to sustain the process, mainly to evaporate water from waste. In parallel to this process, a hazardous liquid waste 106 can be supplied onto the bed of an oxidising catalyst, which increases the energetic value of the process.

Due to optimization of the amount of the gasification agent supplied to the mineraliser, the post-reaction gas has negligible content of H₂O and CO₂ and therefore in the oxidation reaction it absorbs a lot of oxygen, which results in a significant increase of its temperature.

In the DeNOx reactor 145, nitrogen oxides are reduced to N₂, if any existed in the processed waste. Then the gas is supplied to the heat exchanger 146, where the heat is transferred from the gas to water. An alkaline scrubber 148 is activated, when the processed wastes contain halogens or sulphur compounds and is used for their absorption from the purified gas. Gas after the alkaline scrubber may be transferred to the heat exchanger 149, in which the gas returns heat to water passed through the heat exchanger, which may be disposed to e.g. a municipal heating system, a dryer or other heat receiving devices. Then the cooled gas is directed through the adsorber 150 to the atmosphere, as practically pure inert gas for the environment, and its purity is to be monitored by using a monitoring system 151. Of course, when several mineralisers are installed, separate purifying lines may be used for the individual mineralisers or for groups of mineralisers processing wastes of a similar type.

### Production of electricity and/or heat:

After the DeNOx reactor 145, the gas after initial purification process is directed to the heat exchanger 146, where the process of exchange of heat between the gas from the process of mineralisation and the air or water supplied to the heat exchanger, the hot, high pressure air or hot and high pressure water steam is formed that are directed to an electricity and/or heat generating unit 147, in which electricity and/or heat are produced. Depending on the number of mineralisation lines, an adequate number of turbines 147 and/or worms can be built in to ensure electric power supply resulting from the calorific value of processed wastes and the composition of generated gas.

## Claims

1. A method for thermal conversion of waste, **characterized in that** the waste (101, 102) is processed in a mineraliser (139) in a form of a substantially longitudinal, rotatable tube with fixed and/or adjustable elements (205 - 210) positioned therein for transporting batch material during the rotation of the tube while the material is continuously gasified and transformed into hot post-reaction gas and inorganic waste, whereas during the mineralization process the content of carbon oxide (CO) and hydrogen (H₂) in the post-reaction gas is monitored and the amount of a gasification agent input to the mineraliser (139) is set to the value at which the content of the carbon oxide (CO) and hydrogen (H₂) in the post-reaction gas is maximized and at which the temperature of the post-reaction gas is in the range from 300°C to 700°C, and wherein the post-reaction gas is input to a catalytic gas purification installation, in which in a catalytic reactor (143) there oxygen is introduced into the post-reaction gas, and subsequently the purified gas is input to an installation (146, 147) for generation of electricity and/or heat.

2. The method according to claim 1 **characterized in that** oxygen, air, steam, carbon dioxide, hydrogen or their mixtures is used as a gasification agent.

3. The method according to claim 1 **characterized by**
- using an analyser (131), conducting cyclical measurements of calorific value and/or moisture content for the waste intended for thermal disposal (101, 102),
- adjusting the speed of rotation of the mineraliser depending on the calorific value and/or moisture content of the waste input to the mineraliser.

4. The method according to claim 1 **characterized by**
- using a rotary mineraliser (139) comprising in the mineralisation zone (230) vanes (205-210) with adjustable and/or fixed angle of inclination to the longitudinal axis of the mineraliser tube (200), so that during the operation of mineraliser, for larger inclination angles of vanes (205 - 210) the batch material passes faster through the mineralisation zone (230) than for smaller inclination angles of vanes (205 - 210)
- using an analyser (131), conducting cyclical measurements of calorific value and/or moisture content for the waste intended for thermal disposal (101, 102),
- adjusting the angle of vanes with reference to the calorific value and/or moisture content of the waste input to the mineraliser.

5. The method according to claim 1 **characterized by** using multiple mineralisers (139) having assigned mixers (136) and
- by using mixers (136) assigned to the mineralisers (139), mixing the wastes together in proportions dependent on the predetermined amount of chemical energy of the batch material and on the inclination angle of vanes (205 - 210) set in the particular mineraliser (139), so that for a mineraliser (139) having a larger inclination angle of vanes, there is provided a mixture with a higher calorific value than the calorific value of a mixture provided for a mineraliser (139) having a smaller inclination angle of vanes (205-210).

## Patentansprüche

1. Verfahren zur thermischen Umwandlung von Abfall, **dadurch gekennzeichnet, dass** der Abfall (101, 102) in einem Mineralisator (139) in einer Form eines im Wesentlichen längsgerichteten, drehbaren Rohrs mit darin positionierten feststehenden und/oder einstellbaren Elementen (205 - 210) zum Transportieren losen Materials während der Drehung des Rohrs, während das Material kontinuierlich vergast und in heißes Nachreaktionsgas und anorganischen Abfall verwandelt wird, wobei während des Mineralisierungsprozesses der Gehalt an Kohlendioxid (CO) und Wasserstoff (H₂) im Nachreaktionsgas überwacht wird und die Menge eines Vergasungsmittels, das in den Mineralisator (139) eingegeben wird, auf einen Wert eingestellt wird, bei dem der Gehalt an Kohlenoxid (CO) und Wasserstoff (H₂) im Nachreaktionsgas maximiert wird und bei dem die Temperatur des Nachreaktionsgases im Bereich von 300 °C bis 700 °C liegt, und wobei das Nachreaktionsgas in eine Reinigungsanlage für katalytisches Gas geleitet wird, in der in einem katalytischen Reaktor (143) Sauerstoff in das Nachreaktionsgas eingeleitet wird, und das gereinigte Gas anschließend zu einer Anlage (146,147) zur Erzeugung von Strom und/oder Wärme geleitet wird.

2. Verfahren nach Anspruch 1, **dadurch gekennzeichnet, dass** Sauerstoff, Luft, Dampf, Kohlendioxid, Wasserstoff oder ihre Gemische als ein Vergasungsmittel verwendet wird.

3. Verfahren nach Anspruch 1, **gekennzeichnet durch**
- Verwenden eines Analysators (131), der zyklische Messungen des Brennwert- und/oder Feuchtigkeitsgehalts für den Abfall ausführt, der für eine thermische Entsorgung (101,102) vorgesehen ist,
- Einstellen der Drehgeschwindigkeit des Mineralisators in Abhängigkeit vom Brennwert- und/oder Feuchtigkeitsgehalt des eingeleiteten Abfalls in den Mineralisator.

4. Verfahren nach Anspruch 1, **gekennzeichnet durch**
- Verwenden eines drehenden Mineralisators (139) umfassend im Mineralisierungsbereich (230) Leitschaufeln (205-210) mit einstellbarem und/oder feststehendem Neigungswinkel zur Längsachse des Mineralisatorrohrs (200), sodass während des Betriebs des Mineralisators das lose Material bei größeren Neigungswinkeln der Leitschaufeln (205 - 210) den Mineralisierungsbereich (230) schneller durchläuft als wie bei kleineren Neigungswinkeln der Leitschaufeln (205 - 210)
- Verwenden eines Analysators (131), der zyklische Messungen des Brennwert- und/oder Feuchtigkeitsgehalts für den Abfall ausführt, der für eine thermische Entsorgung (101, 102) vorgesehen ist,
- Einstellen des Winkels der Leitschaufeln in Bezug auf den Brennwert- und/oder Feuchtigkeitsgehalt des eingeleiteten Abfalls in den Mineralisator.

5. Verfahren nach Anspruch 1, **gekennzeichnet durch** Verwenden vielfacher Mineralisatoren (139) mit zugeordneten Mischern (136) und
- **durch** Verwenden von Mischern (136), die den Mineralisatoren (139) zugeordnet sind, die die Abfälle zusammen in Anteilen mischen, die von der vordefinierten Menge an chemischer Energie des losen Materials und vom eingestellten Neigungswinkel der Leitschaufeln (205 - 210) im jeweiligen Mineralisator (139) abhängen, sodass bei einem Mineralisator (139) mit einem größeren Neigungswinkel der Leitschaufeln ein Gemisch mit einem höheren Brennwert bereitgestellt wird als der Brennwert eines Gemischs, das für einen Mineralisator (139) mit einem kleineren Neigungswinkel der Leitschaufeln (205-210) bereitgestellt wird.

## Revendications

1. Procédé de conversion thermique de déchets, **caractérisé en ce que** les déchets (101, 102) sont traités dans un minéralisateur (139) sous forme de tube rotatif sensiblement longitudinal doté d'éléments fixes et/ou réglables (205 à 210) disposés à l'intérieur de ce dernier afin de transporter de la matière par lot pendant la rotation du tube tandis que la matière fait l'objet d'une gazéification et d'une transformation continues en un gaz chaud de post-réaction et en déchets inorganiques, alors que, pendant le processus de minéralisation, la teneur en oxyde de carbone (CO) et en hydrogène (H₂) du gaz de post-réaction fait l'objet d'une surveillance et la quantité d'agent de gazéification introduite dans le minéralisateur (139) est fixée à la valeur à laquelle la teneur en oxyde de carbone (CO) et en hydrogène (H₂) du gaz de post-réaction est amenée à une valeur maximale et à laquelle la température du gaz de post-réaction est comprise dans la plage de 300 °C à 700 °C, et dans lequel le gaz de post-réaction est injecté dans une installation de purification de gaz catalytique, dans laquelle de l'oxygène est injecté dans le gaz de post-réaction dans un réacteur catalytique (143), et le gaz purifié est ultérieurement injecté dans une installation (146, 147) de génération d'électricité et/ou de chaleur.

2. Procédé selon la revendication 1, **caractérisé en ce que** de oxygène, de l'air, de la vapeur, du dioxyde de carbone, de l'hydrogène ou des mélanges de ces derniers sont utilisés en tant qu'agent de gazéification.

3. Procédé selon la revendication 1, **caractérisé par** :
- l'utilisation d'un analyseur (131), prenant des mesures cycliques de valeur calorifique et/ou de teneur en humidité des déchets destinés à une élimination thermique (101, 102),
- le réglage de la vitesse de rotation du minéralisateur en fonction de la valeur calorifique et/ou de la teneur en humidité des déchets introduits dans le minéralisateur.

4. Procédé selon la revendication 1, **caractérisé par** :
- l'utilisation d'un minéralisateur rotatif (139) comprenant, dans la zone de minéralisation (230), des ailettes (205 à 210) ayant un angle d'inclinaison réglable et/ou fixe par rapport à l'axe longitudinal du tube (200) de minéralisateur, de sorte que, lors de la mise en oeuvre du minéralisateur à des angles d'inclinaison plus importants des ailettes (205 à 210), la matière en lot traverse la zone de minéralisation (230) plus rapidement qu'à des angles d'inclinaison plus petits des ailettes (205 à 210),
- l'utilisation d'un analyseur (131), prenant des mesures cycliques de valeur calorifique et/ou de teneur en humidité des déchets destinés à une élimination thermique (101, 102),
- le réglage de l'angle des ailettes en fonction de la valeur calorifique et/ou de la teneur en humidité des déchets introduits dans le minéralisateur.

5. Procédé selon la revendication 1, **caractérisé par** l'utilisation de multiples minéralisateurs (139) comportant des mélangeurs attribués (136) et
- par l'utilisation des mélangeurs (136) attribués aux minéralisateurs (139), mélangeant les déchets les uns avec les autres selon des proportions qui dépendent de la quantité prédéterminée d'énergie chimique de la matière en lot et de l'angle d'inclinaison des ailettes (205 à 210) défini dans le minéralisateur particulier (139), de sorte que, pour un minéralisateur (139) dont l'angle d'inclinaison des ailettes est plus grand, on obtienne un mélange ayant une valeur calorifique supérieure à la valeur calorifique obtenue d'un mélange issu d'un minéralisateur (139) dont l'angle d'inclinaison des ailettes (205 à 210) est plus petit.
